# EUROPEAN PATENT SPECIFICATION

(11) **EP 2 683 045 B1**
(45) Date of publication and mention of the grant of the patent: **29.03.2017**
(21) Application number: 13175412.9
(22) Date of filing: 05.07.2013
(51) Int. Cl.: H02G 3/12

(54) **Quick fix fixing arrangement**
Quick-Fix-Befestigungsanordnung
Agencement de fixation à attache rapide

(30) Priority: 06.07.2012 IN CH27412012
(43) Date of publication of application: 08.01.2014
(73) Proprietor: Schneider Electric Industries SAS, 92500 Rueil-Malmaison (FR)
(72) Inventor: Sarawad, Kiran, 560 066 BANGALORE (IN); Kasinathan, Mahendrababu, 560 066 BANGALORE (IN); Suescun, Cesar, 31100 PUENTE LA REINA, NAVARRA (ES)
(74) Representative: Lotti, Giorgio

(56) References cited:
- EP-A1- 2 355 282
- DE-U1- 29 915 112

## Description

**Technical field:** The present invention relates to a quick fix fixing arrangement for quick installation of electrical equipment housed within electrical receptacle.

**Background and prior art:** Quick mounting fastening arrangements are well known in the art. Commonly known such fastening arrangements comprise a screw-threaded bolt which passes through an aperture in the panel and a plastic retaining member which is screw threaded onto the free end of the bolt so that it is generally held in a fixed position on the bolt for rotation with it. The plastic retaining member is spaced from the head of the bolt a sufficient distance to enable the support to be gripped between the rear face of the panel and the opposed faces of respective transversely extending shoulders on the retaining element. The support is provided with an elongate hole and the retaining member has a similar elongate cross-section so that it can be passed through the slot and then turned or rotated so that its transversely extending shoulders grip the rear of the support. In order to ensure positive positioning of the retaining element when it is turned into the fastening position at its end nearer to the head of the bolt, the retaining element is formed with an axially extending protrusion effectively limit rotation of the retaining element to the desired degree of rotation, adjacent faces coming into engagement with the sides of the elongate aperture to define the inoperative and fastening position.

However, it is seen that in many situations, the surface on which the electrical box is mounted is uneven or aforementioned cover or support are of different thickness. Prior arts show that different technologies have been used to account for such variations such as use of a corrugated spacer in US 5,108,243 (Antonucci) or use of a resilient member such as a spring in US 4,166,309 (Schenk).

In Schenk's patent, a quarter turn fastener of single stud length is used and the height of the receptacle is adjusted for the panel thickness after installation. After installation and insertion of the stud through the panels and into the receptacle, permits turning until the required tension are obtained between the stud and the receptacle to hold the panels in fastened position. This automatically sets the height of the receptacle spring and from then on this height is maintained with normal quarter turned operation as the stud is fastened and unfastened during use. However, it is found the fastener arrangement in Schenk's patent provided low resistance to pull-out forces. Thus, the inventor's of the present invention endeavored to invent a fastening arrangement which allows for quick fixing adjustability and at the same time overcome prior art side effects to provide a high sustenance to pull-out forces.

The publication EP2355282A1 discloses a device support having the features according to the preamble of claim 1. Such device comprises a square frame conceived for being fixed to a box embedded in a wall. The square frame is fixed to the box through self-tapping screw, which usually needs several turns to be tightened, that is a relatively time consuming step. Increasing the resistance of such screws to the pull-out force would be a further advantageous achievement.

**Summary of the invention:** The present invention relates to a quick fix fixing arrangement for quick installation of electrical equipment housed within electrical receptacle having the features according to claim 1, such that the arrangement comprises a fastener for engaging a fixing frame and an electrical receptacle. More particularly, the present invention relates to an adjustable fastening arrangement which has the feature of adjustability of the height of the frame to variable rotation and said arrangement can withstand high pull out force. The publication DE29915112U discloses an installation device for trunkings disclosing the features according to the preamble of claim 1.

**Detailed description of drawings:** A full understanding of the invention can be gained from the following description of the preferred embodiments when read in conjunction with the accompanying drawings in which:
Figure 1 is the perspective view of the fastener of quick fix fixing arrangement of the present invention.
Figure 1A is an alternate embodiment of the fastener depicting helix angle of fastener flange
Figure 2 is the front view of the fixing frame mounted on the electrical receptacle of the quick fix fixing arrangement of the present invention.
Figure 3 is the perspective view of the quick fix fixing arrangement of the present invention.
Figure 4A depicts inserting the fastener into the slot of the fixing frame
Figure 4B is a perspective view of fixing frame having fastener-received-slot
Figure 4C depicts aligning the fastener-received-slot with aperture of electrical receptacle and inserting the fastener through the alignment
Figure 4D depicts rotation of fastener along predetermined degree of curvature after the fastener height has been adjusted with respect to the top surface of the receptacle.
Figure 4E is the front view of quick fix fixing arrangement of the present invention having the electrical equipment housed within the receptacle which is fastened to the fixing frame at a desired height.
Figure 5 represents an alternate embodiment of the present invention where a tool is employed for fastening
Figure 5A is an enlarged isometric view of the tool engaging the fastener head
Figure 5B is a front view of the fastener head depicting groove for engaging the tool used in the alternate embodiment.
Figure 6 represents a perspective view of the quick fix fixing arrangement of the present invention mounted on a mounting surface.
Figure 7 represents a front view depicting the fixing frame rotated with respect to top surface for height adjustment.

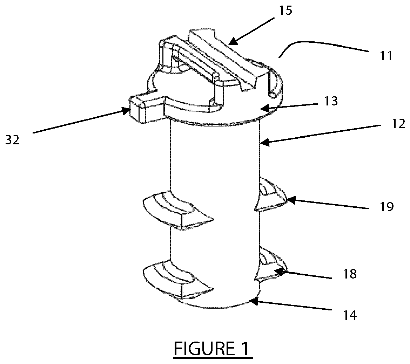

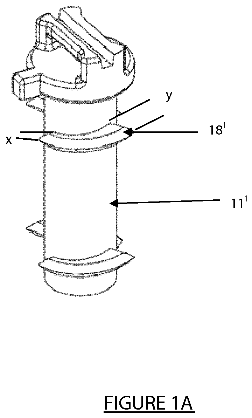

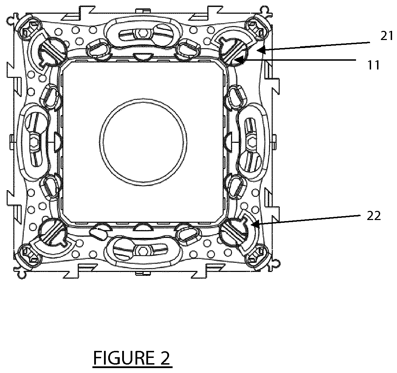

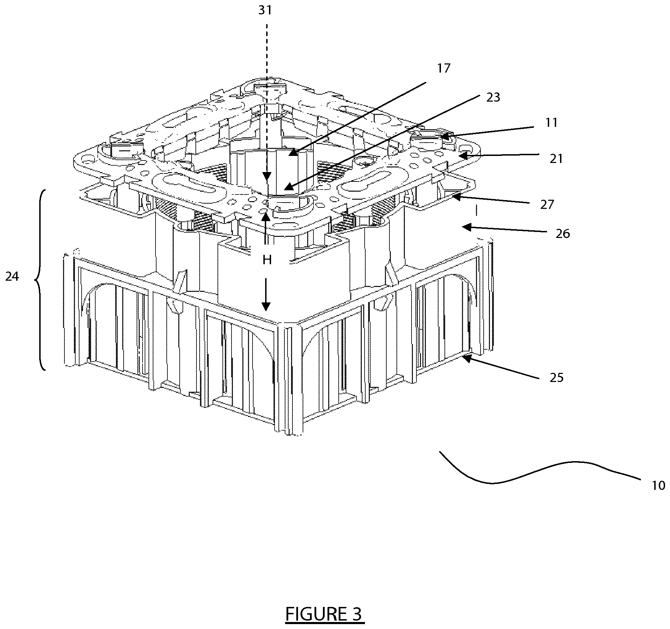

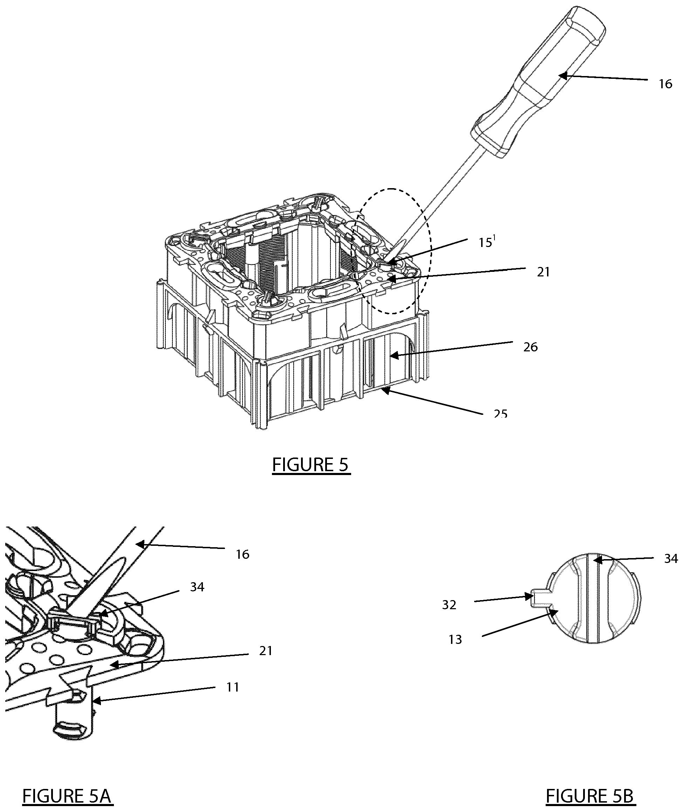

**Detailed description of the invention:** Accompanying figures 1-3 depict an embodiment of the present invention disclosing a quick fix fixing arrangement (10) for quick installing of at least one electrical equipment **(20)** (not seen). The arrangement **(10)** comprises of a fastener **(11)** having a central body **(12)** with enlarged head portion **(13)** and a small diameter end portion **(14)** for linking with top surface **(27)** of a non-metallic electrical receptacle **(24).** The enlarged head portion **(13)** allows steering of the fastener **(11)** by using hand-held projection **(15)** of the head portion **(13)** such as an arched thumb tab by which the fastener **(11)** can be held for fastening into the frame slot **(22).** In an alternate embodiment, the fastener **(11)** can be steered using any suitable tool **(16)** such as a plier, screw driver, allen key, pozi drive head as seen in figure 5 and 5A. In this alternate embodiment as seen in figure 5B, the fastener is provided with a groove **34** for receiving the tool **16.**

The electrical equipment **(20)** to be installed is housed in the enclosure **(23)** of electrical receptacle **(24).** The receptacle **(24)** comprises of a mounting base **(25)** surrounded by side walls **(26).** The top surface **(27)** of the receptacle **(24)** is formed by a continuous periphery formed at the base of side walls **(26).** Thus the top surface **(27)** provides a cavity **(31)** through which the electrical equipment **(20)** is introduced within the receptacle **(24).** The frame **(21)** may be provided with a cover **(29)** to protect the equipment **(20)** from dust, insects and moisture. A variety of electrical equipment can be installed using the arrangement of the present invention, such as switch, socket, movement detector, VDI devices, controls devices etc.

The arrangement **(10)** further comprises of a fixing frame **(21)** having at least one slot **(22)** corresponding to the shape of the central body **(12)** and for permitting passage of the fastener end portion **(14).** The number of slots per frame can be increased to as many as required to achieve perfect coupling with the electrical receptacle. The non-metallic electrical receptacle comprises an enclosure **(23)** for housing the electrical equipment **(20)** and includes on its top surface **(27)** at least one channel **(17)** having an aperture **(28)** on at least one of its ends for receiving the fastener end portion **(14).** Ordinarily the number of slots on the frame correspond to the number of apertures and hence the channels on the electrical receptacle. Further, the frame slot **(22)** is advantageously adapted to be in alignment (A) with the aperture **(28)** to allow the fastener **(11)** to pass through the aligned openings **(22, 28)** for coupling the receptacle **(24)** with the fixing frame. The degree of curvature **(θ)** of the slot **(22)** and aperture **(28)** is desired to be identical.

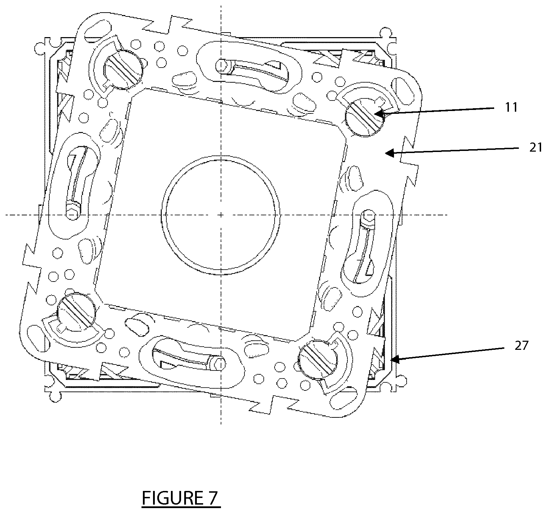

However, during day-to-day activities of installation, maintenance etc, one often finds that a receptacle which has to be coupled does not have a smooth top surface or where the surface on which the frame-coupled-receptacle is to be mounted such as wall or wooden surface is uneven. For such situations, the present invention advantageously provides that the dimensions of the frame slot **(22)** permits deviation of alignment **(A)** of the fixing frame **(21)** up to ±11° with respect to the receptacle **(24)** to achieve perfect coupling of the receptacle **(24)** thereto (Fig 7). Further, the central body **(12)** includes at least one flange **(18)** on its outer surface which permits adjustment of height **(H)** of the frame **(21)** with respect to the top surface **(27)** of the receptacle **(24)** to a variable length. Accordingly the height **(H)** can be adjusted up to 30mm, preferably 20 mm and more preferably from 0mm up to 14 mm from the top surface **(27)** of the electrical receptacle **(24).** It is to be understood that the number of flanges may be increased so as to support sustenance of desired height of the fastener. The flange bears two co-linear end points ***(x)*** and ***(y)**.* In an alternate embodiment represented by figure 1A, the flange **(18¹)** is in shape of a helix and bears a helical angle of 1°-15° between two ends **(*x)*** and ***(y)*** of the flange. The helical angle advantageously prevents height slack when the fastener is reinserted within the same alignment of slot and apertures.

The enlarged head portion **(13)** of the fastener **(11)** extends into a stub **(32)** which prevents rotation of the fastener **(11)** beyond the degree of curvature **(θ)** of the slot **(22).** Thus the fastener **(11)** will not be allowed to rotate beyond the predecided amount of rotation. The degree of curvature **(θ)** of the slot is between 45°-180°, preferably 45°-135° and more preferably 60°-90°. The fastener **(11)** is partially metal or even completely metallic in nature whereas the fixing frame **(21)** can be made from either metallic or non-metallic.

On receiving the fasteners **(11)** into the channels **(17),** the enclosure **(23)** is pierced or bit into by the sharp edges **(19)** of the flange **(18).** This ensures that the fastener has high resistance to pull out force and cannot be removed easily. The pull out force that can be achieved by the present invention is between 10-50 kgs, preferably between 10-35 kgs and more preferably between 15-30 kgs. The electrical receptacle **(24)** of the present invention is made up of any suitable non-metallic or metallic material including soft metals which can be easily pierced and at the same time permit high pullout forces.

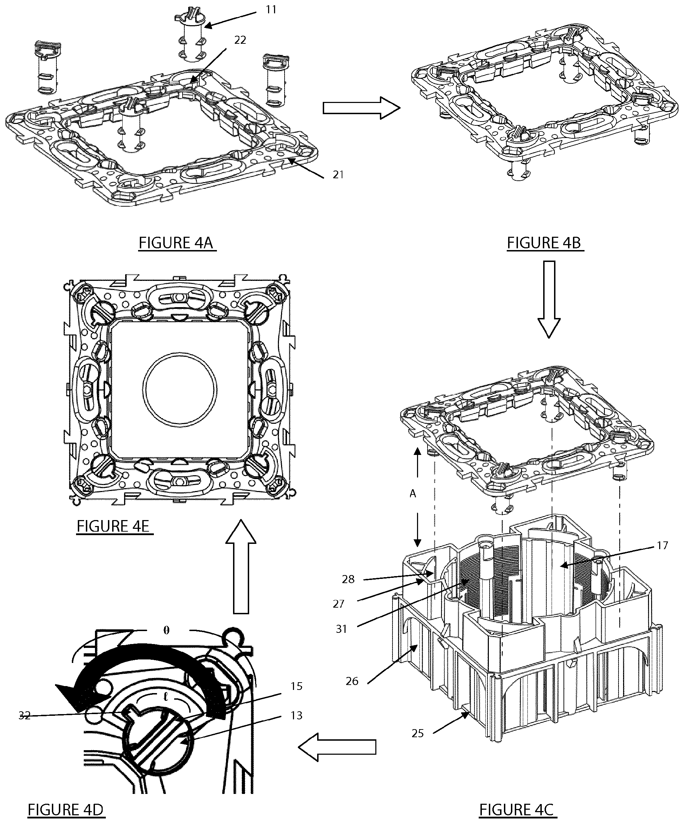

The present invention further provides for a method for quick installation of electrical equipment **(20)** by using the quick fix fixing arrangement **(10)** of the present invention. In accordance with figure 4, the method comprises of inserting fastener **(11)** into slot **(22)** of fixing frame **(21)** as depicted in figure 4A. As seen in figure 4B, the fastener-received-slot **(22)** is aligned with aperture **(28)** of the electrical receptacle **(24)** housed with the electrical equipment **(20)** to achieve alignment **(A).** The fastener end portion **(14)** is inserted into alignment (A) of slot **(22)** and aperture **(28)** such that it is substantially received within the channels **(17).** The height **(H)** of the fastener **(11)** is adjusted with respect to the top surface **(27)** of the receptacle and the fastener **(11)** is rotated along the length **(ℓ)** of the frame to the pre-determined degree of curvature **(θ)** of the slot **(22)** till further rotation is prevented by stub **(32)** to achieve quick fix fixing arrangement **(10).**

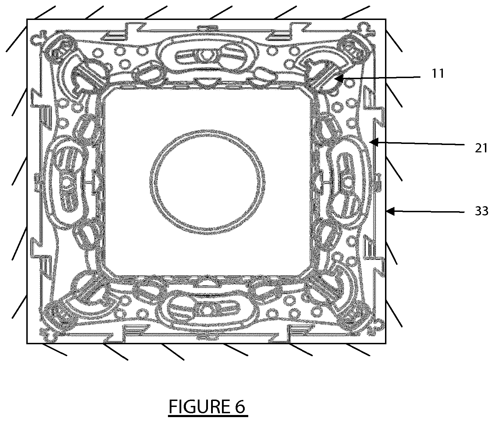

In accordance with Figure 6, the present invention further provides for a method for quick installing of at least one electrical equipment **(20)** housed within an electrical receptacle **(24)** on a suitable mounting surface **(33),** the method comprises of inserting fastener **(11)** into slot **(22)** of fixing frame **(21)** as depicted in figure 4A. As seen in figure 4B, the fastener-received-slot **(22)** is aligned with aperture **(28)** of the electrical receptacle **(24)** housed with the electrical equipment **(20)** to achieve alignment **(A).** The fastener end portion **(14)** is inserted into alignment **(A)** of slot **(22)** and aperture **(28)** such that it is substantially received within the channels **(17).** The height **(H)** of the fastener **(11)** is adjusted with respect to the top surface **(27)** of the receptacle and the mounting surface **(33)** and the fastener **(11)** is rotated along the length **(ℓ)** of the frame to the pre-determined degree of curvature **(θ)** of the slot **(22)** till further rotation is prevented by stub **(32)** to achieve quick fix fixing arrangement **(10).**

Thus the present invention advantageously provides for quick installation of electrical equipment without wasting time in using the convention methods of employing self-tapping screws and yet providing high pull out forces. The quick fix fixing arrangement of the present invention is preferably installed by hand i.e. use of tools is not mandatory. The arrangement also accommodates for surface irregularities of the receptacle as well as the mounting surface enabling it to be used in almost all situations without any limitations. Overall, the present invention is not only time-saving but also saves labour and reduces costs of installation.

The foregoing description has been presented for the purposes of illustration and description. It is not intended to be exhaustive or to limit the invention to the precise form disclosed and obviously many modifications and variations are possible in the light of the above teachings as would normally occur to one skilled in the art to which the invention relates. The embodiments were chosen and described in order to best explain the principles of the invention and its practical application to thereby enable others skilled in the art to best utilize the invention in various embodiments and with various modifications as are suited to the particular use contemplated.

## Claims

1. A quick fix fixing arrangement **(10)** for quick installation of electrical equipment **(20)** comprising:
a) a fastener **(11)** having a central body **(12)** with enlarged head portion **(13)** for steering the fastener **(11)** during fastening and an end portion **(14)** of smaller diameter for linking with top surface **(27)** of an electrical receptacle **(24);**
b) a fixing frame **(21)** having at least one slot **(22)** corresponding to the shape of the central body **(12)** for permitting passage of the fastener end portion **(14)**
c) an electrical receptacle **(24)** for housing the electrical equipment **(20)** for installation;
wherein:
- the central body **(12)** comprises at least one flange **(18)** for permitting adjustment of height **(H)** of the frame **(21)** to variable length;
- the end portion (14) is arranged for linking with top surface (27) of the electrical receptacle (24); and
- the electrical receptacle (24) comprises an enclosure (23); and
- the flange **(18)** comprises of sharp edge **(19)** for piercing or biting into the enclosure **(23)** when the fastener **(11)** is received in the channel **(17);**
the quick fix fixing arrangement being **characterized in that** the sharp edge (19) of the flange (18) does not extend around the whole perimeter of the cross-sections of the central body (12), said cross-sections being considered in planes perpendicular to the rotation axis around which the fastener (11) is rotated for achieving a quick fixing arrangement.

2. The arrangement **(10)** as claimed in claim 1 wherein the height **(H)** of the fixing frame **(21)** can be adjusted up to 30mm, preferably 20mm and more preferably 14 mm from the top surface **(27)** of the receptacle **(24).**

3. The arrangement **(10)** as claimed in claim 1 wherein the head portion **(13)** of the fastener **(11)** comprises a hand held projection **(15)** for holding the fastener **(11)** for steering it into the frame slots **(22).**

4. The arrangement **(10)** as claimed in claim 1 wherein the fastener **(11)** is steered into the frame slots **(22)** by employing a tool within groove **(34)** of the head portion **(13).**

5. The arrangement **(10)** as claimed in any of the preceding claims wherein the enlarged head portion **(13)** extends into a stub **(32)** for preventing rotation of fastener **(11)** beyond degree of curvature **(θ)** of the slot **(22).**

6. The arrangement **(10)** as claimed in any of the preceding claims, wherein the degree of curvature **(θ)** is between 45°-180°, preferably 45°-135° and more preferably 60°-90°.

7. The arrangement **(10)** as claimed in any of the preceding claims wherein the receptacle **(24)** comprises of a mounting base **(25)** surrounded by side walls **(26).**

8. The arrangement **(10)** as claimed in any of the preceding claims wherein the top surface **(27)** being formed by a continuous periphery formed at the base of side walls **(26)** provides a cavity **(31)** within which the electrical equipment **(20)** is introduced within the receptacle **(24).**

9. The arrangement **(10)** as claimed in any of the preceding claims wherein the frame **(21)** is optionally provided with a cover **(29)** to protect the equipment **(20)** from dust, insects and moisture.

10. The arrangement **(10)** as claimed in any of the preceding claims wherein the frame slot **(22)** is adapted to be in alignment **(A)** with the aperture **(28)** to allow the fastener **(11)** to pass through the aligned openings **(22, 28)** for coupling the electrical receptacle **(24)** with the fixing frame **(21).**

11. The arrangement **(10)** as claimed in any of the preceding claims wherein the degree of curvature **(θ)** of slot **(22)** and aperture **(28)** is identical.

12. The arrangement **(10)** as claimed in any of the preceding claims wherein the frame slot **(22)** permits rotation of frame **(21)** up to ±11° to with respect to the receptacle **(24)** to achieve alignment **(A)** of slot **(22)** and the aperture **(28)**

13. The arrangement **(10)** as claimed in any of the preceding claims wherein the fastener **(11)** is at least partially metallic

14. The arrangement **(10)** as claimed in any of the preceding claims wherein the fastener **(11)** is entirely metallic

15. The arrangement **(10)** as claimed in claim 1 wherein the fixing frame **(21)** is metallic in nature

16. The arrangement **(10)** as claimed in any of the preceding claims wherein the fixing frame **(21)** is non-metallic in nature.

17. The arrangement **(10)** as claimed in any of the preceding claims wherein the flange **(18)** has co-linear end points ***(x)*** and ***(y)**.*

18. The arrangement **(10)** as claimed in any of the preceding claims wherein the flange **(18¹)** is a helix bearing end points ***(x)*** and ***(y)*** at a helical angle of 1°-15°.

19. The arrangement **(10)** as claimed in claim 18 wherein the flange **(18¹)** prevents height slack of the fastener **(11)** on reinsertion.

20. The arrangement **(10)** as claimed in any of the preceding claims wherein the fastener **(11)** has high resistance to pull out force up between 10-50 kgs, preferably between 10-35 kgs and more preferably between 15-30 kgs.

21. A method for coupling an electrical receptacle **(24)** comprising an electrical equipment **(20)** said method comprising of:
a) Inserting fastener **(11)** into slot **(22)** of fixing frame **(21)**
b) Aligning fastener-received-slot **(22)** with aperture **(28)** of the electrical receptacle **(24)** housed with the electrical equipment **(20)** to achieve alignment **(A)**
c) Inserting the end portion **(14)** into alignment **(A)** of slot **(22)** and aperture **(28)** such that it is substantially received within the channels **(17)**
d) Adjusting the height **(27)** of the fastener **(11)** with respect to the top surface **(27)** of the receptacle **(24)**
e) Rotating the fastener **(11)** along the length **(ℓ)** of the frame to the pre-determined degree of curvature **(θ)** of the slot **(22)** till further rotation is prevented by stub **(32)** wherein the fastener (11), the fixing frame (21) and the electrical receptacle (24) are part of a quick fix fixing arrangement (19) having the features according to claim 1.

22. A method for quick installing of the electrical receptacle **(24)** comprising an electrical equipment **(20)** on a suitable mounting surface, said method comprising of:
a) Inserting fastener **(11)** into slot **(22)** of fixing frame **(21)**
b) Aligning fastener-received-slot **(22)** with aperture **(28)** of the electrical receptacle **(24)** housed with the electrical equipment **(20)** to achieve alignment **(A)**
c) Inserting the end portion **(14)** into alignment **(A)** of slot **(22)** and aperture **(28)** such that it is substantially received within the channels **(17)**
d) Adjusting the height **(27)** of the fastener **(11)** with respect to the top surface **(27)** of the receptacle **(24)** and mounting surface **(33)**
e) Rotating the fastener **(11)** along the length **(ℓ)** of the frame to the pre-determined degree of curvature **(θ)** of the slot **(22)** till further rotation is prevented by stub **(32);**
wherein the fastener (11), the fixing frame (21) and the electrical receptacle (24) are part of a quick fix fixing arrangement (19) having the features according to claim 1.

## Patentansprüche

1. Quick-Fix-Befestigungsanordnung (10) zur schnellen Installation von elektrischer Ausrüstung (20), umfassend:
(a) ein Befestigungselement (11) mit einem zentralen Körper (12) mit einem vergrößerten Kopfabschnitt (13) zum Steuern des Befestigungselements (11) während der Befestigung und einem Endabschnitt (14) mit kleinerem Durchmesser zum Verbinden mit der Oberseite (27) einer elektrischen Aufnahme (24) ;
(b) einen Befestigungsrahmen (21) mit wenigstens einem Schlitz (22) gemäß der Form des zentralen Körpers (12), um den Durchgang des Endabschnitts (14) des Befestigungselements zu ermöglichen;
(c) eine elektrische Aufnahme (24) zur Unterbringung der elektrischen Ausrüstung (20) für die Installation;
wobei:
- der zentrale Körper (12) wenigstens einen Flansch (18) umfasst, um eine Anpassung der Höhe (H) des Rahmens (21) an unterschiedliche Längen zu ermöglichen;
- der Endabschnitt (14) ist zum Verbinden mit der Oberseite (27) der elektrischen Aufnahme (24) vorgesehen; und
- die elektrische Aufnahme (24) umfasst ein Außengehäuse (23); und
- der Flansch (18) umfasst eine scharfe Kante (19) zum Durchstechen oder Durchdringen des Außengehäuses (23), wenn das Befestigungselement (11) im Kanal (17) aufgenommen wird;
wobei die Quick-Fix-Befestigungsanordnung **dadurch gekennzeichnet ist, dass** die scharfe Kante (19) des Flansches (18) sich nicht um den gesamten Umfang der Querschnitte des zentralen Körpers (12) erstreckt, wobei die Querschnitte als Ebenen zu betrachten sind, die senkrecht zur Drehachse verlaufen, um die das Befestigungselement (11) sich dreht, um eine Quick-Fix-Befestigungsanordnung zu erreichen.

2. Anordnung (10) nach Anspruch 1, wobei die Höhe (H) des Befestigungsrahmens (21) auf bis zu 30 mm, vorzugsweise 20 mm und noch mehr bevorzugt 14 mm von der Oberseite (27) der Aufnahme (24) eingestellt werden kann.

3. Anordnung (10) nach Anspruch 1, wobei der Kopfabschnitt (13) des Befestigungselements (11) eine tragbare Auskragung (15) zum Halten des Befestigungselements (11) umfasst, um dieses in die Schlitze (22) des Rahmens zu steuern.

4. Anordnung (10) nach Anspruch 1, wobei das Befestigungselement (11) in die Schlitze (22) des Rahmens gesteuert wird, wobei ein Werkzeug innerhalb der Nut (34) des Kopfabschnitts (13) eingesetzt wird.

5. Anordnung (10) nach einem beliebigen der vorstehenden Ansprüche, wobei der vergrößerte Kopfabschnitt (13) sich in einen Stutzen (32) hinein erstreckt, um eine Drehung des Befestigungselements (11) über den Krümmungsgrad (θ) des Schlitzes (22) hinaus zu verhindern.

6. Anordnung (10) nach einem beliebigen der vorstehenden Ansprüche, wobei der Krümmungsgrad (θ) 45° - 180°, vorzugsweise 45° - 135° und noch mehr bevorzugt 60° - 90° beträgt.

7. Anordnung (10) nach einem beliebigen der vorstehenden Ansprüche, wobei die Aufnahme (24) eine Montagebasis (25) umfasst, die von Seitenwänden (26) umgeben ist.

8. Anordnung (10) nach einem beliebigen der vorstehenden Ansprüche, wobei die Oberseite (27), die aus einem an der Basis von Seitenwänden (26) gebildeten, durchgehenden Außenumfang gebildet ist, einen Hohlraum (31) vorsieht, durch den die elektrische Ausrüstung (20) in die Aufnahme (24) eingeführt wird.

9. Anordnung (10) nach einem beliebigen der vorstehenden Ansprüche, wobei der Rahmen (21) wahlweise mit einer Abdeckung (29) versehen ist, um die Ausrüstung (20) vor Staub, Insekten und Feuchtigkeit zu schützen.

10. Anordnung (10) nach einem beliebigen der vorstehenden Ansprüche, wobei der Rahmenschlitz (22) dazu geeignet ist, in Fluchtung (A) mit der Öffnung (28) angeordnet zu sein, um es dem Befestigungselement (11) zu erlauben, durch die gefluchteten Öffnungen (22, 28) hindurchzugehen, um die elektrische Aufnahme (24) mit dem Befestigungsrahmen (21) zu koppeln.

11. Anordnung (10) nach einem beliebigen der vorstehenden Ansprüche, wobei der Krümmungsgrad (θ) von Schlitz (22) und Öffnung (28) identisch ist.

12. Anordnung (10) nach einem beliebigen der vorstehenden Ansprüche, wobei der Rahmenschlitz (22) eine Drehung des Rahmens (21) von bis zu ±11° in Bezug auf die Aufnahme (24) erlaubt, um eine Fluchtung (A) von Schlitz (22) und die Öffnung (28) zu erlauben.

13. Anordnung (10) nach einem beliebigen der vorstehenden Ansprüche, wobei das Befestigungselement (11) wenigstens teilweise metallisch ist.

14. Anordnung (10) nach einem beliebigen der vorstehenden Ansprüche, wobei das Befestigungselement (11) vollständig metallisch ist.

15. Anordnung (10) nach Anspruch 1, wobei der Befestigungsrahmen (21) metallischer Natur ist.

16. Anordnung (10) nach einem beliebigen der vorstehenden Ansprüche, wobei der Befestigungsrahmen (21) nichtmetallischer Natur ist.

17. Anordnung (10) nach einem beliebigen der vorstehenden Ansprüche, wobei der Flansch (18) kollineare Endpunkte *(x)* und *(y)* aufweist.

18. Anordnung (10) nach einem beliebigen der vorstehenden Ansprüche, wobei der Flansch (18¹) eine Halix ist, die Endpunkte (x) und *(y)* in einem Schrägungswinkel von 1° - 15° abstützt.

19. Anordnung (10) nach Anspruch 18, wobei der Flansch (18¹) einen Höhendurchhang des Befestigungselements (11) beim erneuten Einsetzen verhindert.

20. Anordnung (10) nach einem beliebigen der vorstehenden Ansprüche, wobei das Befestigungselement (11) eine hohe Beständigkeit gegen die Auszugskraft aufweist, die zwischen 10 und 50 kg, vorzugsweise zwischen 10 und 35 kg und noch mehr bevorzugt zwischen 15 und 30 kg beträgt.

21. Verfahren zum Koppeln einer elektrischen Aufnahme (24), umfassend eine elektrische Ausrüstung (20), wobei das Verfahren Folgendes umfasst:
(a) Einsetzen des Befestigungselements (11) in den Schlitz (22) des Befestigungsrahmens (21)
(b) Fluchten des Schlitzes (22) mit aufgenommenem Befestigungselement auf die Öffnung (28) der elektrischen Aufnahme (24), die mit der elektrischen Ausrüstung (20) aufgenommen wird, um die Fluchtung (A) zu erzielen
(c) Einsetzen des Endabschnitts (14) in die Fluchtung (A) von Schlitz (22) und Öffnung (28), derart, dass er im Wesentlichen innerhalb des Kanals (17) aufgenommen wird
(d) Anpassen der Höhe (27) des Befestigungselements (11) in Bezug auf die Oberseite (27) der Aufnahme (24)
(e) Drehen des Befestigungselements (11) längs der Länge (ℓ) des Rahmens in den vorgegebenen Krümmungsgrad (θ) des Schlitzes (22) bis eine weitere Drehung durch den Stutzen (32) verhindert wird;
(a) wobei das Befestigungselement (11), der Befestigungsrahmen (21) und die elektrische Aufnahme (24) Teile einer Quick-Fix-Befestigungsanordnung (1910) sind, die die Merkmale nach Anspruch 1 aufweist.

22. Verfahren zum schnellen Installieren der elektrischen Aufnahme (24), umfassend eine elektrische Ausrüstung (20) auf einer dazu geeigneten Montagefläche, wobei das Verfahren Folgendes umfasst:
(a) Einsetzen des Befestigungselements (11) in den Schlitz (22) des Befestigungsrahmens (21)
(b) Fluchten des Schlitzes (22) mit aufgenommenem Befestigungselement auf die Öffnung (28) der elektrischen Aufnahme (24), die mit der elektrischen Ausrüstung (20) aufgenommen wird, um die Fluchtung (A) zu erzielen
(c) Einsetzen des Endabschnitts (14) in die Fluchtung (A) von Schlitz (22) und Öffnung (28), derart, dass er im Wesentlichen innerhalb des Kanals (17) aufgenommen wird
(d) Anpassen der Höhe (27) des Befestigungselements (11) in Bezug auf die Oberseite (27) der Aufnahme (24) und der Montagefläche (33)
(e) Drehen des Befestigungselements (11) längs der Länge (ℓ) des Rahmens in den vorgegebenen Krümmungsgrad (θ) des Schlitzes (22) bis eine weitere Drehung durch den Stutzen (32) verhindert wird;
(a) wobei das Befestigungselement (11), der Befestigungsrahmen (21) und die elektrische Aufnahme (24) Teile einer Quick-Fix-Befestigungsanordnung (1910) sind, die die Merkmale nach Anspruch 1 aufweist.

## Revendications

1. Agencement de fixation à attache rapide (10) pour l'installation rapide d'un équipement électrique (20) comprenant :
a) un élément de fixation (11) ayant un corps central (12) avec une partie de tête élargie (13) pour conduire l'élément de fixation (11) durant la fixation et une partie d'extrémité (14) de plus petit diamètre pour la liaison avec une surface supérieure (27) d'une prise électrique (24) ;
b) un cadre de fixation (21) ayant au moins une fente (22) correspondant à la forme du corps central (12) pour permettre le passage de la partie d'extrémité (14) d'élément de fixation;
c) une prise électrique (24) pour le logement de l'équipement électrique (20) pour l'installation ;
dans lequel :
- le corps central (12) comprend au moins une bride (18) pour permettre un réglage en hauteur (H) du cadre (21) pour une longueur variable ;
- la partie d'extrémité (14) est agencée pour la liaison avec une surface supérieure (27) de la prise électrique (24) ; et
- la prise électrique (24) comprend une enceinte (23) ; et
- la bride (18) comprend une arête vive (19) pour percer ou mordre dans l'enceinte (23) quand l'élément de fixation (11) est reçu dans le canal (17) ;
l'agencement de fixation à attache rapide étant **caractérisé en ce que** l'arête vive (19) de la bride (18) ne s'étend pas autour de tout le périmètre des sections transversales du corps central (12), lesdites sections transversales étant considérées dans des plans perpendiculaires à l'axe de rotation autour duquel l'élément de fixation (11) est pivoté pour obtenir un agencement de fixation rapide.

2. Agencement (10) selon la revendication 1, dans lequel la hauteur (H) du cadre de fixation (21) peut être réglée jusqu'à 30 mm, de préférence 20 mm et de manière davantage préférée 14 mm par rapport à la surface supérieure (27) de la prise (24).

3. Agencement (10) selon la revendication 1, dans lequel la partie de tête (13) de l'élément de fixation (11) comprend une saillie de préhension (15) pour tenir l'élément de fixation (11) pour le conduire dans les fentes du cadre (22).

4. Agencement (10) selon la revendication 1, dans lequel l'élément de fixation (11) est conduit dans les fentes du cadre (22) en utilisant un outil dans une rainure (34) de la partie de tête (13).

5. Agencement (10) selon l'une quelconque des revendications précédentes, dans lequel la partie de tête élargie (13) s'étend dans un talon (32) pour empêcher une rotation de l'élément de fixation (11) au-delà d'un degré de courbure (θ) de la fente (22).

6. Agencement (10) selon l'une quelconque des revendications précédentes, dans lequel le degré de courbure (θ) est entre 45° et 180°, de préférence entre 45° et 135° et de manière davantage préférée entre 60° et 90°.

7. Agencement (10) selon l'une quelconque des revendications précédentes, dans lequel la prise (24) comprend une base de montage (25) entourée par des parois latérales (26).

8. Agencement (10) selon l'une quelconque des revendications précédentes, dans lequel la surface supérieure (27), qui est formée par une périphérie continue formée à la base de parois latérales (26), fournit une cavité (31) dans laquelle l'équipement électrique (20) est introduit à l'intérieur de la prise (24).

9. Agencement (10) selon l'une quelconque des revendications précédentes, dans lequel le cadre (21) est éventuellement muni d'un couvercle (29) pour protéger l'équipement (20) de la poussière, des insectes et de l'humidité.

10. Agencement (10) selon l'une quelconque des revendications précédentes, dans lequel la fente du cadre (22) est adaptée pour être en alignement (A) avec l'ouverture (28) pour permettre à l'élément de fixation (11) de passer à travers les ouvertures alignées (22, 28) pour accoupler la prise électrique (24) avec le cadre de fixation (21).

11. Agencement (10) selon l'une quelconque des revendications précédentes, dans lequel le degré de courbure (θ) de la fente (22) et de l'ouverture (28) est identique.

12. Agencement (10) selon l'une quelconque des revendications précédentes, dans lequel la fente du cadre (22) permet une rotation du cadre (21) jusqu'à ±11° par rapport à la prise (24) pour obtenir l'alignement (A) de la fente (22) et de l'ouverture (28).

13. Agencement (10) selon l'une quelconque des revendications précédentes, dans lequel l'élément de fixation (11) est au moins partiellement métallique.

14. Agencement (10) selon l'une quelconque des revendications précédentes, dans lequel l'élément de fixation (11) est entièrement métallique.

15. Agencement (10) selon la revendication 1, dans lequel le cadre de fixation (21) est de nature métallique.

16. Agencement (10) selon l'une quelconque des revendications précédentes, dans lequel le cadre de fixation (21) est de nature non métallique.

17. Agencement (10) selon l'une quelconque des revendications précédentes, dans lequel la bride (18) a des points d'extrémité colinéaires *(x)* et *(y)*.

18. Agencement (10) selon l'une quelconque des revendications précédentes, dans lequel la bride (18¹) est une hélice portant des points d'extrémité *(x)* et *(y)* à un angle d'hélice de 1 °-15°.

19. Agencement (10) selon la revendication 18, dans lequel la bride (18¹) empêche un jeu en hauteur de l'élément de fixation (11) lors de la réintroduction.

20. Agencement (10) selon l'une quelconque des revendications précédentes, dans lequel l'élément de fixation (11) a une haute résistance à une force d'extraction jusqu'à entre 10 et 50 kg, de préférence entre 10 et 35 kg et de manière davantage préférée entre 15 et 30 kg.

21. Procédé pour accoupler une prise électrique (24) comprenant un équipement électrique (20), ledit procédé comprenant :
a) l'introduction d'un élément de fixation (11) dans une fente (22) d'un cadre de fixation (21)
b) l'alignement de la fente ayant reçu l'élément de fixation (22) avec une ouverture (28) de la prise électrique (24) logée avec l'équipement électrique (20) pour obtenir l'alignement (A)
c) l'introduction de la partie d'extrémité (14) dans l'alignement (A) de la fente (22) et de l'ouverture (28) de manière qu'elle soit sensiblement reçue à l'intérieur des canaux (17)
d) le réglage de la hauteur (27) de l'élément de fixation (11) par rapport à la surface supérieure (27) de la prise (24)
e) la rotation de l'élément de fixation (11) suivant la longueur (f) du cadre du degré de courbure prédéterminé (θ) de la fente (22) jusqu'à ce qu'une rotation ultérieure soit empêchée par un talon (32) ;
(a) dans lequel l'élément de fixation (11), le cadre de fixation (21) et la prise électrique (24) font partie d'un agencement de fixation à attache rapide (1910) ayant les caractéristiques selon la revendication 1.

22. Procédé pour l'installation rapide de la prise électrique (24) comprenant un équipement électrique (20) sur une surface de montage appropriée, ledit procédé comprenant :
a) l'introduction d'un élément de fixation (11) dans une fente (22) du cadre de fixation (21)
b) l'alignement de la fente ayant reçu l'élément de fixation (22) avec une ouverture (28) de la prise électrique (24) logée avec l'équipement électrique (20) pour obtenir l'alignement (A)
c) l'introduction de la partie d'extrémité (14) dans l'alignement (A) de la fente (22) et de l'ouverture (28) de manière qu'elle soit sensiblement reçue à l'intérieur des canaux (17)
d) le réglage de la hauteur (27) de l'élément de fixation (11) par rapport à la surface supérieure (27) de la prise (24) et de la surface de montage (33)
e) la rotation de l'élément de fixation (11) suivant la longueur (ℓ) du cadre du degré de courbure prédéterminé (θ) de la fente (22) jusqu'à ce qu'une rotation ultérieure soit empêchée par un talon (32) ;
(a) dans lequel l'élément de fixation (11), le cadre de fixation (21) et la prise électrique (24) font partie d'un agencement de fixation à attache rapide (1910) ayant les caractéristiques selon la revendication 1.
